# EUROPÄISCHE PATENTSCHRIFT

(11) **EP 0 859 212 B1**
(45) Veröffentlichungstag und Bekanntmachung des Hinweises auf die Patenterteilung: **03.07.2002**
(21) Anmeldenummer: 98101114.1
(22) Anmeldetag: 23.01.1998
(51) Int. Cl.: F42B 15/36

(54) **Spannring zum Verbinden von zylinderförmigen Baugruppen von Flugkörpern**
Clamping ring for fastening the cylindrical elements of a missile
Anneau de presse pour raccorder des éléments de forme cylindrique de missile

(30) Priorität: 14.02.1997 DE 19705712
(43) Veröffentlichungstag der Anmeldung: 19.08.1998
(73) Patentinhaber: Bodenseewerk Gerätetechnik GmbH, 88662 Überlingen (DE)
(72) Erfinder: Giesenberg, Peter, 88682 Salem (DE); Flickinger, Rainer, 88356 Ostrach/Ochsenbach (DE); Kessler, Friedrich, 88046 Friedrichshafen (DE)
(74) Vertreter: Weisse, Jürgen, Dipl.-Phys.

(56) Entgegenhaltungen:
- DE-A- 3 028 609
- FR-A- 2 674 892
- US-A- 2 809 584
- US-A- 3 193 129
- US-A- 3 215 082
- US-A- 4 008 937
- US-A- 5 188 400
- US-A- 5 286 135
- US-A- 5 540 465

## Beschreibung

Die Erfindung betrifft einen Spannring mit einem im wesentlichen kreisförmig gebogenen Umfangsteil, dessen beide Enden durch Spannmittel in Umfangsrichtung spannbar sind, zum Verbinden von zylinderförmigen Baugruppen von Flugkörpern, die je einen Umfangs-Vorsprung mit einer flach-konischen Anlagefläche aufweisen, wobei der Spannring einen Mittelbereich und längs seiner beiden Ränder Wangen mit entsprechend flach-konischen Anlageflächen aufweist, mit denen der Spannring über die Umfangs-Vorsprünge der Baugruppen greift, wobei der Spannring mit seinen Anlageflächen auf den Anlageflächen der Umfangs-Vorsprünge an den zylinderförmigen Baugruppen festgezogen wird.

Zielverfolgende Flugkörper bestehen aus einer Mehrzahl von im wesentlichen rohr- oder zylinderförmigen Baugruppen, beispielsweise einem Suchkopf, der Elektronik-Baugruppe, dem Gefechtskopf und dem Antrieb. Solche Baugruppen sind durch Spannringe miteinander verbunden. Die Spannringe sind annähernd zu einem Kreisbogen gebogene Teile, die an ihren Enden durch ein Spannschloß im Umfangsrichtung gespannt werden. Die Spannringe weisen auf ihrer Innenseite längs der Ränder Wangen auf. Mit diesen nach innen ragenden Wangen greifen die Spannringe über nach außen ragende Umfangs-Vorsprünge der zu verbindenden Baugruppen, so daß diese beim Spannen der Spannringe zusammengezogen und fest miteinander verbunden werden. Zu diesem Zweck weisen die beiden Wangen jedes Spannringes auf den einander zugewandten Innenseiten flach-konische Anlageflächen auf. Diese Anlageflächen liegen an entsprechend flach konischen Anlageflächen an den Umfangs-Vorsprüngen an, die an den Baugruppen gebildet sind.

Die Umfangs-Vorsprünge der Baugruppen liegen üblicherweise mit ihren Stirnflächen aneinander an. Die Baugruppen können dabei mit ihren Enden ineinandergesteckt sein. Die Umfangs-Vorsprünge an den zu verbindenden Baugruppen können zylindrische Mantelflächen mit unterschiedliche Radien aufweisen. Dabei kann z.B. eine zylindrische Mantelfläche mit der Stirnfläche des Umfangs-Vorsprunges durch eine konische Fläche verbunden sein. Die Umfangs-Vorsprünge können wiederum an radial gegenüber der zylindrischen Mantelfläche der Baugruppe radial nach innen versetzten Abschnitten vorgesehen sein, so daß der über die Umfangs-Vorsprünge greifende Spannring nicht wesentlich über die Mantelfläche des Flugkörpers vorsteht, was aus aerodynamischen Gründen wünschenswert ist. Die Wangen an dem Spannring können unterschiedlich weit gegenüber dem Mittelbereich des Spannringes nach innen vorstehen.

Bei einem bekannten Spannring der eingangs genannten Art ist unter Berücksichtigung aller Toleranzen der Umfangs-Vorsprünge der Baugruppen der maximale Außendurchmesser eines Umfangs-Vorsprunges eines Bauteils wesentlich größer als der zugehörige Innendurchmesser des Spannringes. Beim Anziehen des Spannringes mittels eines Spannschlosses liegt daher die Innenfläche im Mittelbereich des Spannringes an der Außenfläche eines der an den Baugruppen gebildeten Umfangs-Vorsprunges nicht überall formschlüssig an.

Es hat sich in der Praxis gezeigt, daß die bekannten Spannringe bei bestimmten, in der Praxis auftretenden Belastungen brechen können. Das kann gravierende Folgen haben. Einer einfachen Verstärkung der Spannringe sind durch konstruktive Vorgaben, z.B. die Form der Umfangs-Vorsprünge an den zu verbindenden Baugruppen und die maximal zulässigen radialen Abmessungen der Spannringe, Grenzen gesetzt.

Der Erfindung liegt die Aufgabe zugrunde, unter Berücksichtigung des für den Spannring zur Verfügung stehenden Raumes, insbesondere der radialen Abmessungen des Spannringes, die Festigkeit des Spannringes zu erhöhen.

Erfindungsgemäß wird diese Aufgabe dadurch gelöst, daß
(a) die Innenfläche des Mittelbereichs des Spannringes eine kantenfreie, eng um die Außenkonturen der bauteilseitigen Umfangs-Vorsprünge geführte Fläche ist und
(b) an den Übergängen zwischen dieser kantenfreien Fläche und den Anlageflächen der Wangen des Spannringes abgerundete Umfangs-Ausnehmungen zur Erzielung größerer Übergangsradien gebildet sind.

Vorzugsweise weist die Außenfläche des Spannringes im Mittelbereich einen im wesentlichen zylindrischen Abschnitt auf und verläuft erst im Bereich der Wangen zur Stirnfläche des Spannringes hin mit abgerundetem Übergang von dem zylindrischen Abschnitt etwa konisch einwärts.

Die Erfindung beruht vor allem auf der Erkenntnis, daß eine Überbelastung des Spannringes in den Kanten auf der Innenseite zwischen dem Mittelbereich des Spannringes und den Wangen auftreten kann. Dort ist der Krümmungsradius klein und dementsprechend sind die Spannungen im Material dort hoch. Nach der Erfindung ist die Innenfläche des Mittelbereiches zwar möglichst eng um die Außenkonturen der bauteilseitigen Umfangs-Vorsprünge geführt aber glatt durchgehend ohne Kanten ausgebildet. Dadurch wird einerseits die Dicke des Spannringes möglichst groß gemacht, andererseits werden aber Stufen und Kanten vermieden, an denen kleine Krümmungsradien und hohe Material-Spannungen auftreten können. Weiterhin sind zwischen dem Mittelbereich und den Wangen abgerundete Umfangs-Ausnehmungen gebildet. Dadurch wird zwar Material weggenommen der Krümmungsradius aber vergrößert. Die spezifischen Material-Spannungen werden dadurch verringert.

Zur Vergrößerung der Dicke des Spannringes ohne Überschreitung der zulässigen radialen Abmessungen weist dafür bei der bevorzugten Ausführung die Außenfläche des Spannringes im Mittelbereich einen im wesentlichen zylindrischen Abschnitt auf. Von diesem Abschnitt geht die Außenfläche dann abgerundet in einen im wesentlichen konischen Abschnitt über, der sich einwärts zu der radialen Stirnfläche des Spannringes erstreckt. Dadurch verläuft die Außenkontur des Spannringes außerhalb der Außenkontur vorbekannter Spannringe und bringt eine entsprechende Erhöhung der Festigkeit, ohne jedoch die maximal zulässigen radialen Abmessungen des Spannringes zu überschreiten.

Es hat sich gezeigt. daß durch das Zusammenwirken der erfindungsgemäßen Maßnahmen eine wesentliche Erhöhung der Festigkeit des Spannringes erreicht werden kann. Dabei sind die Abmessungen des Spannringes so, daß der Spannring ohne weiteres an Stelle vorbekannter Spannringe eingesetzt werden kann. Vorhandene Flugkörper können ohne konstruktive Änderungen mit den erfindungsgemäßen Spannringen nachgerüstet werden.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: zeigt als Seitenansicht ein Startgerät mit einem zielverfolgenden Flugkörper, bei welchem einzelne Baugruppen durch Spannringe miteinander verbunden sind.
- Fig.2: ist eine perspektivische Darstellung eines Spannringes.
- Fig. 3: zeigt einen abgebrochenen Längsschnitt der aneinandergrenzenden Teile zweier Baugruppen des Flugkörpers mit aneinander anliegenden Umfangs-Vorsprüngen, die durch einen Spannring zusammengehalten werden.
- Fig. 4: zeigt einen Querschnitt des Spannringes, wobei in gestrichelten Linien der Querschnitt eines vorbekannten Spannringes eingezeichnet ist.

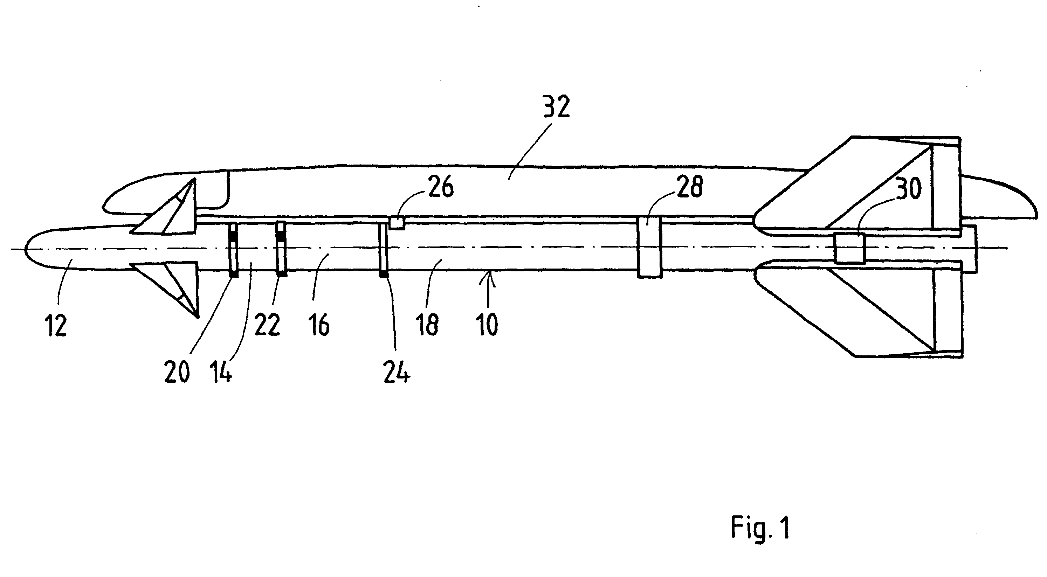

In Fig.1 ist mit 10 ein zielverfolgender Flugkörper bezeichnet. Der Flugkörper 10 besteht aus zylindrischen oder rohrförmigen Baugruppen 12, 14, 16, 18. Die Baugruppen 12, 14, 16 und 18 sind durch Spannringe 20, 22 und 24 miteinander verbunden. Der Flugkörper 10 ist über Hänger 26, 28, 30 in einem Startgerät 32 aufgehängt. Das ist an sich bekannt und daher hier nicht im einzelnen beschrieben.

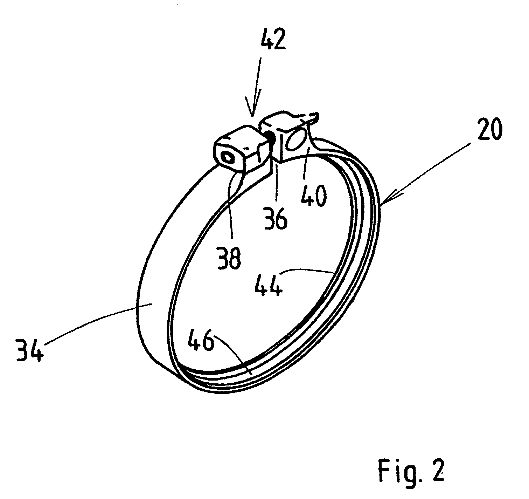

Fig.2 ist eine perspektivische Darstellung eines Spannringes, z.B. des Spannringes 20. Der Spannring 20 weist einen etwa kreisbogenförmigen Umfangsteil 34 auf, der an einer Stelle 36 geteilt ist und zwei Enden 38 und 40 bildet. Die beiden Enden 38 und 40 können durch ein Spannschloß 42 zusammengezogen werden. Dadurch wird der Spannring 20 um die zu verbindenden Baugruppen 12 und 14 gespannt. Der Spannring weist längs seiner beiden Ränder nach innen vorstehende Wangen 44 und 46 auf. Die Wangen 44 und 46 greifen über Umfangs-Vorsprünge, die an den zu verbindenden Bauteilen wie 12 und 14 angebracht sind.

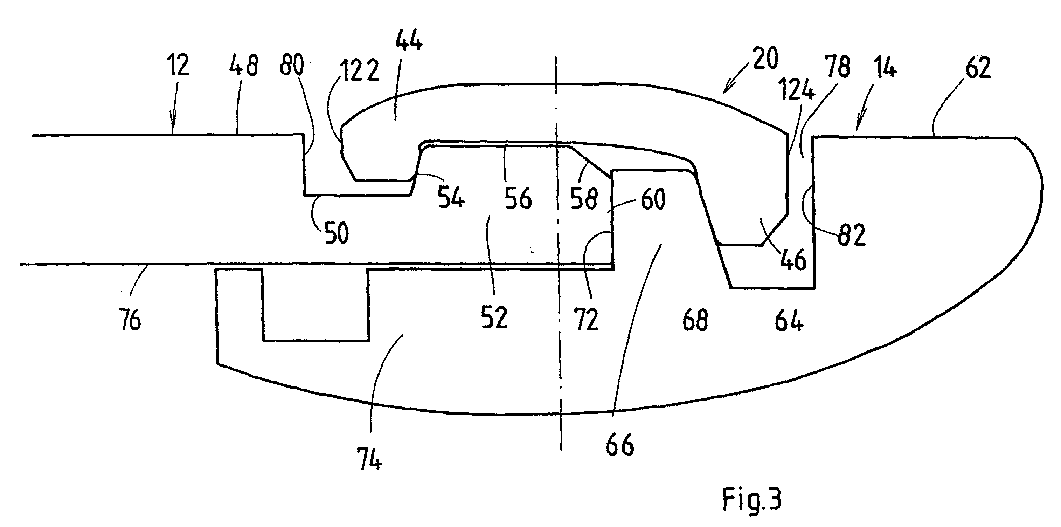

Das ist in Fig.3 dargestellt.

In Fig.3 weist die Außenkontur einer Baugruppe 12 einen zylindrischen Abschnitt 48 auf, dessen Durchmesser dem Außendurchmesser des Flugkörpers 10 entspricht. An dem der benachbarten Baugruppe 14 zugewandten Ende der Baugruppe 12 springt die Außenkontur der Baugruppe 12 nach innen zurück und bildet einen zylindrischen Abschnitt 50 von gegenüber dem Abschnitt 48 vermindertem Durchmesser. Von diesem Abschnitt 48 verminderten Durchmessers springt wiederum ein Umfangs-Vorsprung 52 nach außen vor. Der Umfangs-Vorsprung 52 weist der Baugruppe 12 zugewandt eine flach-konische Anlagefläche 54 auf. An die Anlagefläche 54 schließt sich eine zylindrische Umfangsfläche 56 an. Die zylindrische Umfangsfläche 56 ist über eine konische Verbindungsfläche 58 mit einer radialen Stirnfläche 60 des Umfangs-Vorsprungs 52 verbunden. Diese Stirnfläche 60 bildet hier zugleich die Stirnfläche der rohrförmigen Baugruppe 12.

Die Außenkontur der Baugruppe 14 in Fig.3 weist ebenfalls einen zylindrischen Abschnitt 62 auf, dessen Durchmesser dem Außendurchmesser des Flugkörpers 10 entspricht. Auch die Außenkontur der Baugruppe 14 springt an dem der Baugruppe 12 zugewandten Ende zurück und bildet einen zylindrischen Abschnitt 64 von vermindertem Durchmesser. Von dem zylindrischen Abschnitt 64 springt ebenfalls ein Umfangs-Vorsprung 66 nach außen vor. Der Umfangs-Vorsprung 66 bildet anschließend an den zylindrischen Abschnitt 64 eine flach-konische Anlagefläche 68. Die flach-konische Anlagefläche 68 ist entgegengesetzt zu der Anlagefläche 54 geneigt. Die Kegelspitze des die Anlagefläche 54 definierenden Kegels liegt in Fig.3 links von der Anlagefläche 54 zur Baugruppe 12 hin. Die Kegelspitze des die Anlagefläche 68 definierenden Kegels liegt in Fig.3 rechts von der Anlagefläche 68 zur Baugruppe 14 hin. An die Anlagefläche 68 schließt sich eine zylindrische Umfangsfläche 70 an. Die Umfangsfläche 70 erstreckt sich bis zu einer radialen Stirnfläche 72 des Umfangs-Vorsprunges 66. Der Durchmesser der Umfangsfläche 70 ist etwas kleiner als der Durchmesser der Umfangsfläche 56. Die Stirnflächen 60 und 72 der Umfangs-Vorsprünge 52 bzw. 66 liegen aneinander an.

Bei der Anordnung von Fig.3 ragt die Baugruppe 14 mit einem Ansatz 74 teleskopartig in eine Bohrung 76 der rohrförmigen Baugruppe 12.

Bei dieser Ausbildung der Baugruppen wird zwischen den Baugruppen 12 und 14 eine Art Umfangsnut 78 gebildet, die von den radialen Ringflächen 80 und 82 und den zylindrischen Abschnitten 50 und 64 begrenzt ist und in welche die Umfangs-Vorsprünge 52 und 66 hineinragen. In dieser Umfangsnut 78 sitzt der Spannring 20. Der Spannring 20 greift mit den Wangen 44 und 46 über die Umfangs-Vorsprünge 52 und 66 und zieht die beiden Baugruppen 12 und 14 zusammen. Der Spannring 20 sollte weitgehend in dieser "Umfangsnut" 78 untergebracht sein. Er darf nicht über ein bestimmtes Maß hinaus über die zylindrische Außenkontur des Flugkörpers 10 hinausragen. Dadurch ist die radiale Ausdehnung des Spannringes 20 begrenzt.

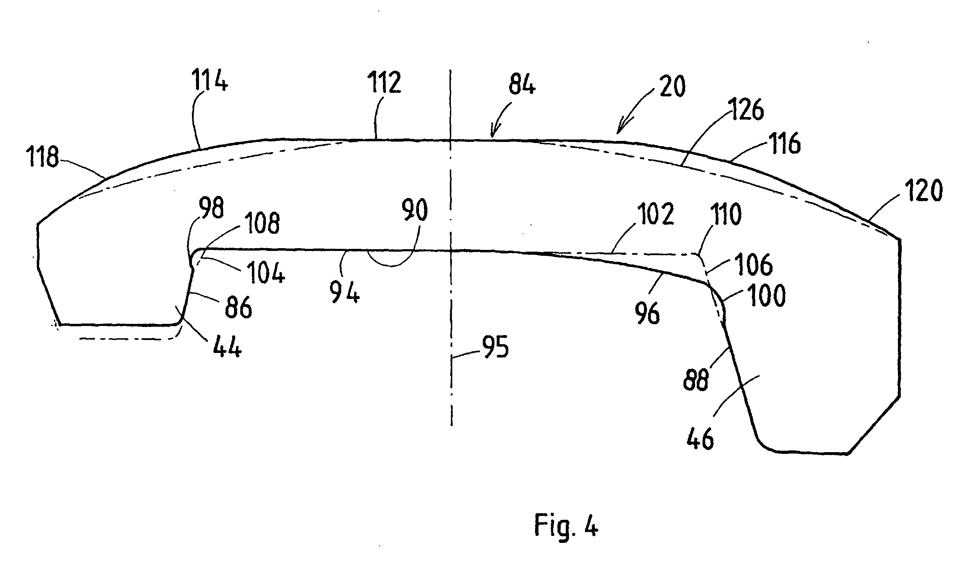

Wie am besten aus Fig.4 ersichtlich ist, weist der Spannring 20 einen Mittelbereich 84 und längs der Ränder nach innen ragende Wangen 44 und 46 auf. Die Wange 44 bildet eine flach-konische Anlagefläche 86 komplementär zu der Anlagefläche 54 des Umfangs-Vorsprungs 52. Die Wange 46 bildet eine flach-konische Anlagefläche 88 komplementär zu der Anlagefläche 68 des Umfangs-Vorsprungs 66. Die Innenfläche 90 des Mittelbereichs 84 des Spannringes 20 bildet eine kantenfreie, eng um die Außenkonturen der bauteilseitigen Umfangs-Vorsprünge 52 und 66 geführte Fläche. Bei der beschriebenen Außenkontur der Umfangs-Vorsprünge 52 und 66 weist die Innenfläche 90 anschließend an die Wange 44 einen im wesentlichen zylindrischen Abschnitt 94 auf. Der Abschnitt 94 erstreckt sich bis etwa zur Mittelebene 95 des Spannringes 20. Daran schließt sich tangential ein schwach-konkaver Abschnitt 96 an, der in die Innenfläche der Wange 46 übergeht. An den Übergängen zwischen dieser kantenfreien Innenfläche 90 und den Anlageflächen 86 und 88 der Wangen 44 bzw. 46 des Spannringes 20 sind abgerundete Umfangs-Ausnehmungen 98 bzw. 100 zur Erzielung größerer Übergangsradien gebildet.

In Fig.4 sind zum Vergleich die Konturen eines vorbekannten Spannringes in gestrichelten Linien dargestellt. Die Innenfläche 102 des vorbekannten Spannringes ist über die gesamte Breite des Mittelbereiches hin durchgehend zylindrisch. Zwischen den Anlageflächen 104 und 106 der Wangen 44 bzw. 46 und der durchgehend zylindrischen Innenfläche 102 sind Kanten 108 bzw. 110 mit relativ kleinem Krümmungsradius gebildet. Demgegenüber ist der Spannring 20 zu der Wange 46 hin über die zylindrische Fläche 102 hinaus verdickt. Es ergibt sich ein gleichmäßigerer Übergang zu der Anlagefläche 88, wobei der Krümmungsradius durch die Umfangs-Ausnehmung 100 noch zusätzlich vergrößert ist. Ebenso erfolgt eine Vergrößerung des Krümmungsradius zwischen der Innenfläche 90 und der Anlagefläche 86. Durch die Verdickung des Spannringes 20 zu der Wange 46 hin wird der Raum zwischen Spannring 20 und Kontur der Umfangs-Vorsprünge 52, 66 optimal zur Verstärkung des Spannringes 20 ausgenutzt, jedoch ohne daß in der Innenfläche 90 wieder Kanten auftreten, wie das bei einer anderen bekannten Ausführung des Spannringes der Fall ist, bei der die Innenfläche entsprechend den Konturen der Umfangs-Vorsprünge gestuft ist.

Auf der Außenseite weist der Spannring 20 im Mittelbereich 84 einen im wesentlichen zylindrischen Abschnitt 112 auf. Der Durchmesser des zylindrischen Abschnitts 112 entspricht dem maximal zulässigen Durchmesser des Spannringes 20. Der zylindrische Abschnitt 112 erstreckt sich nahezu über den gesamten Mittelbereich des Spannringes 20. Daran anschließend bildet die Außenfläche des Spannringes im Bereich der Wangen 44 und 46 konvexe Übergangsflächen 114 bzw. 116 , die tangential in den zylindrischen Abschnitt 112 einlaufen. Die konvexen Übergangsflächen 114 und 116 gehen dann in annähernd konische Abschnitte 118 bzw. 120 über. Die Abschnitte 118 und 120 enden dann in radialen Stirnflächen 122 bzw. 124 der Wangen 44 bzw. 46.

Wie aus Fig.4 ersichtlich ist, geht die Außenkontur des Spannringes 20 über die Außenkontur 126 des vorbekannten Spannringes hinaus. Diese Außenkontur 126 ist im Querschnitt durchgehend konvex und näherungsweise kreisbogenförmig. Auf diese Weise wird der Spannring 20 im Bereich des kritischen Überganges von Mittelbereich 84 zu Wangen 44 und 46 zusätzlich verstärkt, ohne daß dadurch der maximal zulässige Durchmesser des Spannringes 20 überschritten wird.

Der Innendurchmesser des zylindrischen Abschnitts 94 der Innenfläche 90 des Spannringes 20 und der Außendurchmesser des angrenzenden Umfangs-Vorsprungs 52 sind so toleriert sind, daß bei kleinstem Außendurchmesser des Umfangs-Vorsprungs 52 und größtem Innendurchmesser der Innenfläche 90 des Spannringes 20 gerade noch eine Klemmung zwischen Spannring 20 und Umfangs-Vorsprung 52 erfolgt. Es ist also weder der Innendurchmesser des Spannrings 20 wesentlich kleiner als der Außendurchmesser des Abschnitts 56, wie das bei dem eingangs erwähnten Spannring nach dem Stand der Technik der Fall ist, noch ist umgekehrt der Innendurchmesser des Spannringes wesentlich größer als der Außendurchmesser des Abschnitts 56 der Außenkontur wie bei einer anderen Ausführung nach dem Stand der Technik. Damit werden einerseits Probleme mit der Passung und Anlage des Spannringes vermieden und andererseits der verfügbare Raum optimal zur Verstärkung des Spannringes ausgenutzt.

Die Übergangsradien können durch Drücken oder Rollen kaltverformt sein. Dadurch werden Vorspannungen in den Übergangsbereichen zwischen Innenfläche 90 einerseits und Anlageflächen 86 und 88 andererseits erzeugt, welche den Biegespannungen bei Beanspruchung Flugkörpers 10 und des Spannringes 20 entgegenwirken.

Der Spannring kann als Feingußteil hergestellt sein.

Weiterhin ist es vorteilhaft, wenn die Anlageflächen mit einem Trockenschmierfilm versehen sind. Es kann aber auch auf die Anlageflächen eine Metallschicht, vorzugsweise von Chrom oder Nickel, aufgebracht sein.

## Patentansprüche

1. Spannring mit einem im wesentlichen kreisförmig gebogenen Umfangsteil (34), dessen beide Enden (36,38) durch Spannmittel (42) in Umfangsrichtung spannbar sind, zum Verbinden von zylinderförmigen Baugruppen (12,14,16,18) eines Flugkörpers (10), die je einen Umfangs-Vorsprung (52,66) mit einer flach-konischen Anlagefläche (54,68) aufweisen, wobei der Spannring (20) einen Mittelbereich (84) und längs seiner beiden Ränder Wangen (44,46) mit entsprechend flach-konischen Anlageflächen (86,88) aufweist, mit denen der Spannring (20) über die Umfangs-Vorsprünge (52,66) der Baugruppen (12,14) greift, wobei der Spannring (20) mit seinen Anlageflächen (86,88) auf den Anlageflächen (54,68) der Umfangs-Vorsprünge (52,66) an den zylinderförmigen Baugruppen (12,14) festgezogen wird, **dadurch gekennzeichnet, daß**
(a) die Innenfläche (90) des Mittelbereichs (84) des Spannringes (20) eine kantenfreie, eng um die Außenkonturen der bauteilseitigen Umfangs-Vorsprünge (52,66) geführte Fläche ist und
(b) an den Übergängen zwischen dieser kantenfreien Innenfläche (90) und den Anlageflächen (86,88) der Wangen (44,46) des Spannringes (20) abgerundete Umfangs-Ausnehmungen (98,100) zur Erzielung größerer Übergangsradien gebildet sind.

2. Spannring nach Anspruch 1, **dadurch gekennzeichnet, daß** die Außenfläche des Spannringes (20) im Mittelbereich (84) einen im wesentlichen zylindrischen Abschnitt (112) aufweist und erst im Bereich der Wangen (44,46) zur Stirnfläche (122,124) des Spannringes (20) hin mit abgerundetem Übergang (114,116) von dem zylindrischen Abschnitt (112) etwa konisch einwärts verläuft (118,120).

3. Spannring nach Anspruch 1 oder 2, **dadurch gekennzeichnet, daß** die Innenfläche (90) des Mittelbereiches (84) anschließend an eine erste Wange (44) des Spannringes (20) einen im wesentlichen zylindrischen Abschnitt (94) im Bereich eines größten Durchmessers des angrenzenden, bauteilseitigen Umfangs-Vorsprunges (52) aufweist und daran anschließend zu dem Übergang zu der Anlagefläche (88) der zweiten Wange (46) des Spannringes (20) hin flach-konkav einwärts verläuft.

4. Spannring nach Anspruch 3, **dadurch gekennzeichnet, daß** der Innendurchmesser des zylindrischen Abschnitts (94) der Innenfläche und der Außendurchmesser des angrenzenden Umfangs-Vorsprungs (52) so toleriert sind, daß bei kleinstem Außendurchmesser des Umfangs-Vorsprungs (52) und größtem Innendurchmesser des Mittelbereichs (84) des Spannringes (20) gerade noch eine Klemmung zwischen Spannring (20) und Umfangs-Vorsprung (52) erfolgt.

5. Spannring nach einem der Ansprüche 1 bis 4, **dadurch gekennzeichnet, daß** die Übergangsradien durch Drücken oder Rollen kaltverformt sind.

6. Spannring nach einem der Ansprüche 1 bis 5, **dadurch gekennzeichnet, daß** er als Feingußteil hergestellt ist.

7. Spannring nach einem der Ansprüche 1 bis 6, **dadurch gekennzeichnet, daß** die Anlageflächen (86,88) mit einem Trockenschmierfilm versehen sind.

8. Spannring nach einem der Ansprüche 1 bis 6, **dadurch gekennzeichnet, daß** auf die Anlageflächen (86,88) eine Metallschicht, vorzugsweise von Chrom oder Nickel, aufgebracht ist.

## Claims

1. Clamping ring having a circumferential portion (34) bent substantially to an arc of a circle, the two ends (36,38) of which being adapted to be tightened in circumferential direction by means of clamping means (42), for connecting cylindrical units (12,14,16,18) of a missile (10), which have each a circumferential projection (52,66) having a flat-conical engagement surface (52,68), the clamping ring (20) having a central area (84) and cheeks (44,46) extending along the two rims of the clamping ring and having corresponding flat-conical engagement surfaces (86,88), by means of which the clamping ring (20) extends over the circumferential projections (52,66) of the units (12,14), the clamping ring (20) being tightened to the cylindrical units (12,14) while the engagement surfaces (86,88) of the clamping ring engage the engagement surfaces (54,68) of the circumferential projections (52,66), **characterized in that**
(a) the inner surface (90) of the central area (84) of the clamping ring (20) is a surface free from edges and guided tightly about the outer contours of the circumferential projections (52,66) of the units and
(b) rounded circumferential recesses (98,100) are provided at the transitions between this inner surface (90) free from edges and the engagement surfaces (86,88) of the cheeks (44,46) of the clamping ring (20) in order to achieve larger transition radii.

2. Clamping ring as set forth in claim 1, **characterized in that** the outer surface of the clamping ring (20) has a substantially cylindrical section (112) in the central area (84) and begins, in the area of the cheeks (44,46), to extend approximately conically inwards from the cylindrical section (112) with rounded transition (114,116) towards the front surface (122,124) of the clamping ring (20).

3. Clamping ring as set forth in claim 1 or 2, **characterized in that** the inner surface (90) of the central area (84) of the clamping ring (20), adjacent to a first cheek (44) of the clamping ring (20), has a substantially cylindrical section (94) in the area of a largest diameter of the adjacent circumferential projection (52) of the unit, and subsequently extends flat-conically inwards to the transition to the engagement surface (88) of the second cheek (46) of the clamping ring (20).

4. Clamping ring as set forth in claim 3, **characterized in that** the inner diameter of the cylindrical section (94) of the inner surface and the outer diameter of the adjacent circumferential projection (52) are manufactured with such tolerances, that clamping the clamping ring (20) and the circumferential projection (52) is only just effected with the smallest outer diameter of the circumferential projection (52) and the largest inner diameter of the central area (84) of the clamping ring (20).

5. Clamping ring as set forth in any one of the claims 1 to 4, **characterized in that** the transition radii are cold-worked by chasing or rolling.

6. Clamping ring as set forth in any one of the claims 1 to 5, **characterized in that** it is manufactured as cast part.

7. Clamping ring as set forth in any one of the claims 1 to 6, **characterized in that** the engagement surfaces (86,88) are provided with a dry-film lubricant.

8. Clamping ring as set forth in any one of the claims 1 to 6, **characterized in that** the engagement surfaces (86,88) are provided with a metal layer, preferably of chrome or nickel.

## Revendications

1. Bague de serrage munie d'un élément circonférentiel (34) cintré essentiellement circulairement, dont les deux extrémités (36,38) sont susceptibles d'être serrées dans le sens circonférentiel par des moyens de serrage (42), destinée à relier des groupes d'assemblage cylindriques (12,14,16,18) d'un missile (10) présentant chacun une saillie circonférentielle (52,66) munie d'une surface d'appui (54,68) en forme de cône plat, la bague de serrage (20) présentant un domaine médian (84) et, le long de ses deux rebords, des faces jumelles (44,46) munies de surfaces d'appui (86,88) étant de même en forme de cône plat, à l'aide desquelles la bague de serrage (20) mord sur les saillies circonférentielles (52,66) des groupes d'assemblage (12,14), la bague de serrage (20) étant serrée avec ses surfaces d'appui (86,88) sur les surfaces d'appui (54,68) des saillies circonférentielles (52,66) des groupes d'assemblage cylindriques (12,14),
**caractérisée par le fait que**
(a) la surface intérieure (90) du domaine médian (84) de la bague de serrage (20) est une surface sans arête guidée très près le long des contours extérieurs des saillies circonférentielles (52,66) situées du côté de l'élément de construction et
(b) des creux circonférentiels arrondis (98,100) destinés à obtenir des rayons de transition plus importants sont formés au niveau des transitions situées entre cette surface intérieure sans arête (90) et les surfaces d'appui (86,88) des faces jumelles (44,46) de la bague de serrage (20).

2. Bague de serrage selon la revendication 1, **caractérisée par le fait que** la surface extérieure de la bague de serrage (20) présente dans le domaine médian (84) une section essentiellement cylindrique (112) et s'étend à peu près coniquement vers l'intérieur, d'abord dans le domaine des faces jumelles (44,46), de la section cylindrique (112) vers la surface frontale (122,124) de la bague de serrage (20) munie d'une transition arrondie (114,116).

3. Bague de serrage selon la revendication 1 ou 2, **caractérisée par le fait que** la surface intérieure (90) du domaine médian (84) présente une section essentiellement cylindrique (94) dans le domaine d'un diamètre maximal de la saillie circonférentielle (52) adjacente située du côté de l'élément de construction en étant adjacente à une première face jumelle (44) de la bague de serrage (20) et s'étire en partant de là vers l'intérieur avec une forme concave plate vers la transition menant à la surface d'appui (88) de la seconde face jumelle (46) de la bague de serrage (20).

4. Bague de serrage selon la revendication 3, **caractérisée par le fait que** le diamètre intérieur de la section cylindrique (94) de la surface intérieure et le diamètre extérieur de la saillie circonférentielle adjacente (52) sont tolérés de telle façon que, dans le cas d'un diamètre extérieur minimal de la saillie circonférentielle (52) et d'un diamètre intérieur maximal du domaine médian (84) de la bague de serrage (20), la bague de serrage (20) et la saillie circonférentielle (52) arrivent encore à être coincées.

5. Bague de serrage selon l'une des revendications 1 à 4, **caractérisée par le fait que** les rayons de transition font l'objet d'une déformation à froid par repoussage ou roulage.

6. Bague de serrage selon l'une des revendications 1 à 5, **caractérisée par le fait qu**'elle est fabriquée en pièce moulée à cire perdue.

7. Bague de serrage selon l'une des revendications 1 à 6, **caractérisée par le fait que** les surfaces d'appui (86,88) sont pourvues d'un film lubrifié à sec.

8. Bague de serrage selon l'une des revendications 1 à 6, **caractérisée par le fait qu**'une couche de métal, de préférence de chrome ou de nickel, est appliquée sur les surfaces d'appui (86,88).
